# EUROPEAN PATENT APPLICATION

(11) **EP 3 993 563 A1**
(43) Date of publication of application: **04.05.2022**
(21) Application number: 20205136.3
(22) Date of filing: 02.11.2020
(51) Int. Cl.: H05B 47/105, H05B 47/115

(54) **LUMINAIRE AND SYSTEM FOR PROVIDING LIGHTING TO A WORKING ENVIRONMENT OF A PERSON**

(71) Applicant: Zumtobel Lighting GmbH, 6850 Dornbirn (AT)
(72) Inventor: Desta, Tamrat, 6850 Dornbirn (AT)
(74) Representative: Beder, Jens

(57) **Abstract**

The present invention provides a luminaire (2) for providing lighting to a working environment (3), in particular to a working table (10), of a person (9) and monitoring a condition of the working environment (3) and/or a condition of the person (9). The luminaire (2) comprises one or more sensors (4) configured to detect the person (9), when the person (9) is present in the working environment (3), and/or the working environment (3). In addition, the luminaire (2) comprises a processing unit (5) configured to monitor the condition of the working environment (3) and/or the condition of the person (9) on the basis of detection results of the one or more sensors (4) by processing the detection results (4). The processing unit (5) is configured to perform an action in dependence on the condition of the working environment (3) and/or the condition of the person (9). Further, the present invention provides a system (1) for providing lighting to a working environment (3), in particular to a working table (10), of a person (9) and monitoring a condition of the working environment (3) and/or a condition of the person (9), wherein the system (1) comprises one or more such luminaires (2). In addition, the system comprises a central control unit (7) or a computer (8) present in the working environment (3).

## Description

The present invention relates to a luminaire for providing lighting to a working environment, in particular to a working table, of a person and monitoring a condition of the working environment and/or a condition of the person. The present invention also relates to systems for providing lighting to a working environment, in particular to a working table, of a person and monitoring a condition of the working environment and/or a condition of the person.

In the prior art luminaires for providing lighting to an environment, such as a working environment of a person are well known.

The atmosphere in the working environment of a person has an impact on the productiveness and well-being of the person working in the working environment. The atmosphere of a working environment depends on several factors, such as the lighting, the temperature, sources of distraction (e.g. sunlight through windows, messy working table etc.). For example, in case the light intensity in the working environment is too low, reading may be more stressful for the eyes of the person trying to read in the working environment. Moreover, low light intensity in the working environment may cause the person working in the working environment to get quicker tired, which reduces the ability of the person to concentrate.

Further, new working environment concepts, such as agile working environments, where working tables in an office are not assigned to individual persons, but persons may choose every day a different working table that is still free, provide a further impact on the atmosphere in the working environment. For example, in case a person does not clean up the working table at the end of work, the burden of cleaning up the working table is put on the next person that wants to use the working table. This does not provide for a good atmosphere in the working environment for the next person. For example, in case the next person is in a hurry, he has either to provide valuable time for cleaning up or use the working table in an uncleaned condition. This adds extra stress on said person.

Moreover, since a person having an office job often spends several hours every working day in the working environment, in particular in the working table, there is the possibility that a health issue affecting the own health or the health of co-workers working nearby occurs when the person is present in the working environment.

In the light of the above, embodiments of the present invention aim to provide a luminaire and a system, which deal with one or more of the above outlined issues. It is in particular an object of the present invention to provide a luminaire and system that allows to improve the productiveness and well-being of a person at a working environment. It is in particular a further object of the present invention to provide a luminaire and system that improve the safety of a person at a working environment. In addition, it is in particular a further object of the present invention to provide a luminaire and system that may compensate inadequacies of a person at a working environment.

These and other objects, which become apparent upon reading the following description, are solved by the subject-matter of the independent claim. The dependent claims refer to preferred embodiments of the invention.

According to a first aspect of the present disclosure, a luminaire for providing lighting to a working environment, in particular to a working table, of a person and monitoring a condition of the working environment and/or a condition of the person is provided.
The luminaire comprises one or more sensors configured to detect the person, when the person is present in the working environment, and/or the working environment. In addition, the luminaire comprises a processing unit configured to monitor the condition of the working environment and/or the condition of the person on the basis of detection results of the one or more sensors by processing the detection results. The processing unit is configured to perform an action in dependence on the condition of the working environment and/or the condition of the person.

In other words, the present disclosure proposes an "intelligent" luminaire that is able to observe a working environment, in particular a working table, of a person and the person itself, when the person is present in the working environment using one or more sensors. A processing unit of the luminaire is able to use the information about the working environment and/or the person that it receives from the one or more sensors to determine, in particular recognize, the condition of the working environment and/or the condition of the person by processing said received information. In response to the determined condition of the working environment and/or the determined condition of the person, the processing unit is configured to perform an action, wherein the type of action depends on the determined condition of the working environment and/or the determined condition of the person.

Thus, the luminaire of the first aspect is configured to learn about the condition of the working environment and/or the condition of the person. The luminaire may be configured to use this learned information to change factors that have an effect on the condition of the working environment and/or the condition of the person present in the working environment. The luminaire is configured to do this by performing an action in dependence on the condition of the working environment and/or the condition of the person.

As a result, the luminaire is able to influence factors responsible for the atmosphere of the working environment and, thus, to improve the well-being and productiveness of the person, when the person is present in the working environment. In addition, the luminaire is able to improve the safety of the person and compensate inadequacies of the person.

In particular, the processing unit maybe configured to perform, in dependence on the condition of the working environment and/or the condition of the person, an action that has an effect respectively influence on the condition of the working environment and/or the condition of the person. Thus, by performing the action the processing unit may change the condition of the working environment and/or the condition of the person.

In particular, in the working environment a working table is present. Thus, the luminaire may be used for providing lighting to the working table. A computer may be present in the working environment. Preferably, the computer is present on the working table. The computer maybe a stationary computer, e.g. a desktop computer, or a movable computer, e.g. a laptop computer. A computer present in the working environment may be referred to as workstation computer. The aforementioned is valid for any computer that is present in the working environment.

The terms "condition" and "state" may be used as synonyms.

In particular, the one or more sensors may provide the detection results in the form of detection signals to the processing unit. According to an embodiment, the one or more sensors and the processing unit may be electrically connected to a bus, such as a DALI or DALI-2 bus, and the processing unit may receive the detection results via the bus from the one or more sensors. DALI (Digital Adressable Lighting Interface), also known as DALI, Edition 1, and DALI-2, also known as DALI, Edition 2, are industry standards that are well known in the field of lighting. The optional bus of the luminaire is in particular a wired bus.

The processing unit may comprise or correspond to a processor, a microprocessor, a controller, a microcontroller, a field programmable gate array (FPGA), an application specific integrated circuit (ASIC) or any combination of them.

The luminaire may comprise a data storage for storing data, such as the detection result of the one or more sensors. The data storage may be a part of the processing unit. The processing unit may be configured to read data from the data storage and/or write data to the data storage. The one or more sensors may be configured to write data to the data storage. In particular, the data storage may be connected to the optional bus of the luminaire. In particular, the data storage may be used for storing target conditions of the working environment, thresholds for different types of condition of the working environment, target conditions of the person and/or thresholds for different types of condition of the person. Such data may comprise or correspond to e.g. a target sitting position of the person, a locked mode of the computer as a target mode, one or more tidiness level thresholds of a working table in the working environment, one or more stress level thresholds, health level thresholds and/or tiredness level thresholds of the person.

For determining the condition of the working environment and/or the condition of the person, the processing unit may be configured to process the detection results by using one or more algorithms for evaluating the detection results and/or one or more look-up tables storing reference data for evaluating the detection results. In particular, for processing the detection results to determine the condition of the working environment and/or the condition of the person, the processing unit may use artificial intelligence. In particular, the processing unit may use machine learning for processing the detection results. The processing unit may use one or more artificial neuronal networks for processing the detection results.

In an implementation form of the first aspect, the processing unit is configured to determine a deviation of the condition of the working environment from a target condition of the working environment and/or a deviation of the condition of the person from a target condition of the person. The processing unit may be configured to perform the action in case the deviation of the condition of the working environment from the target condition of the working environment and/or the deviation of the condition of the person from the target condition of the person is determined.

In particular, the processing unit may be configured to determine the condition of the working environment and/or the condition of the person and compare the condition of the working environment with the target condition of the working environment and/or the condition of the person with the target condition of the person. In case the determined condition of the working environment deviates from the respective target condition and/or the condition of the person deviates from the respective target condition, the processing unit may perform the action.

The terms "target condition", "desired condition" and "desirable condition" may be used as synonyms. That is, the terms "target", "desired" and "desirable" may be used as synonyms. The terms "deviate" and "differ" may be used as synonyms.

In particular, the one or more sensors may comprise or correspond to one or more of the following sensors:
- one or more presence- and/or movement sensors configured to detect a presence and/or movement of the person;
- one or more sensors, in particular radar based sensors, configured to measure a distance to the person and/or an object of the working environment, in particular of a working table of the working environment;
- one or more sensors configured to measure the temperature of the working environment and/or the temperature of the person;
- one or more sensors configured to measure the light in the working environment;
- one or more cameras; and
- one or more video cameras.

The one or more sensor of the luminaire may be implemented by any sensors known to the skilled person.

In particular, the one or more sensors may comprise or correspond to one or more cameras and/or video cameras. In this case, the detection results are image data and the processing unit may be configured to determine the condition of the working environment and/or the condition of the person by processing the image data using image processing methods known to the skilled person.

In particular, the condition of the working environment may comprises or correspond to one or more of the following conditions:
- a condition of a working table present in the working environment, in particular a tidiness level of the working table, and
- a condition of a computer present in the working environment, in particular on the working table, with regard to a use mode or a locked mode.

The condition of the working environment may comprise or correspond to the condition of the working environment as a whole as well as to the condition of a part of the working environment, such as a working table, a computer etc.

The terms "tidiness level", "degree of tidiness" and "tidiness degree" may be used as synonyms. That is, the terms "level" and "degree" maybe used as synonyms. The tidiness level of a working table is to be understood as a measure, e.g. between 0% and 100%, that indicates how tidy the working table is. The higher the tidiness level the more tidy the working table is. One or more parameters may be defined for evaluating the tidiness level of a working table. For example, the total number of objects, in particular movable objects, (such as coffee cup, papers, files, books etc.) present on the working table, the two-dimensional areal number density of such objects on the working table, the type of the objects (e.g. unnecessary objects, such as garbage, crumpled paper etc.), the presence of dust and/or dirt etc. maybe parameters for evaluating the tidiness level.

The processing unit may be configured to determine the number of objects by performing an object recognition method on the basis of the received detection results of the one or more sensors. In this case, the one or more sensors may comprise or correspond to one or more cameras and/or video cameras that may provide images of the working table in the form of image data and the processing unit may be configured to perform an image processing method for recognizing respectively determining objects present on the working table.

Alternatively, more simple sensors may be used (such as one or more radar sensors and/or infrared sensors) that are configured to detect objects, in particular the profile of objects. The presence of dust and/or dirt on the working table may for example be detected by using one or more sensors that are configured to measure the reflectivity of the working table surface. Namely, the reflectivity of the surface changes with the amount and type of particles, such as dust particles, that are present on the working table surface.

In particular, the processing unit maybe configured to determine respectively recognize objects on the working table by taking a reference from the surface of the working table as a zero level and identify profiles that are above the zero level as objects. In particular, the processing unit may be configured to determine the kind/type of objects present on the working table by performing an object recognition method. The processing unit maybe configured to determine, whether objects are present on the working table, that are unnecessary respectively useless (e.g. used cups, garbage, crumples paper etc.

In particular, the processing unit may determine whether the tidiness level is above a tidiness level threshold or not. In case the processing unit determines that the tidiness level is below the tidiness level threshold, the processing unit may determine that the working table is untidy and, thus, needs a cleaning and/or tidy up.

In addition or alternatively, the processing unit may be configured to determine whether a computer present in the working environment is in a use mode (unlocked mode) or in locked mode. For this, the processing unit may evaluate image data from one or more cameras and/or video cameras.

A condition of the working environment may also comprise or correspond to the temperature of the working environment and/or the brightness in the working environment.

The condition of the person may comprise or correspond to one or more of the following conditions: a posture of the person, a facial expression of the person, a gesture of the person, a temperature of the person, a sitting position of the person, a stress level of the person, a health level of the person, and a tiredness level of the person.

In an implementation form of the first aspect, the processing unit is configured to determine the posture, facial expression gesture and/or temperature of the person by processing the detection results of the one or more sensors. The processing unit may be configured to determine the sitting position of the person based on the posture. In addition or alternatively, the processing unit may be configured to determine the stress level of the person based on the posture, facial expression, gesture and/or temperature of the person. In addition or alternatively, the processing unit may be configured to determine the health level of the person based on the posture, facial expression, gesture and/or temperature. In addition or alternatively, the processing unit may be configured to determine the tiredness level of the person based on the posture, facial expression, gesture and/or temperature of the person.

For example, in case the one or more sensors comprise or correspond to one or more cameras and/or video cameras that are configured to make images of the person, when the person is present in the working environment, the processing unit may be configured to perform an image processing method on the image data received from the one or more cameras and/or video cameras in order to determine a posture, facial expression and/or gesture.

The posture, facial expression and/or gesture may also be determined on the basis of detection results from more simple sensors. For example, the one or more sensors of the luminaire may comprise or correspond to one or more sensors configured to detect the distance, presence and/or absence of body parts of a person at a location. An example of such sensors are photoelectric sensors, radar sensors, infrared sensors etc.

A target sitting position of a person in a working environment is such that the back is straight and not round. Therefore, one or more sensors may be arranged at the luminaire such that the presence of the person is detected only when the posture of the person is such that the person is sitting with a straight back so that the sitting position of the person is within a range (e.g. within certain limits) of the desired sitting position. In case the back of the person is too round and, thus, the sitting position is outside the range of the desired sitting position, at least one of the one or more sensors does not detect the presence of the person. Thus, the processing unit may be configured to determine based on the detection results of the aforementioned one or more sensor the posture of the person.

In addition or alternatively, the one or more sensors may be configured to measure a distance to a characteristic body part of the person, such as the head of the person. Since the head of the person maybe bent forward, when the person is sitting with a round back (undesired sitting position) in comparison to the position of the head, when the person is sitting with a straight back (desired/target sitting position), the distance measured by the one or more sensors to the head is different for the two aforementioned sitting positions. In this case, the luminaire may be arranged in front of the person. Therefore, the processing unit may be configured to determine based on the distance to the person, in particular head, measured by the one or more sensors the posture of the person, that is whether the person sits such that the back is round and the head is bend forwards or such that the back is straight.

The processing unit may be configured to determine the posture of the person with respect to the back (i.e. whether the back is straight or round) by determining the position of the back from a reference point of the sitting chair (e.g. determining the angle between the person's back and the chair backrest).

The processing unit may be configured to determine on the basis of the posture of the person the sitting position, in particular whether the sitting position of the person corresponds to the target sitting position.

The higher the stress level of the person the more the person is stressed (having a negative effect on the well-being of the person) and vice versa. The processor unit maybe configured to determine the stress level of the person based on the posture, facial expression, gesture and/or temperature of the person. For example, when a person is more stressed, the posture of the person may be more tense, the facial expression of the person may be less relaxed, the gesture of the person may be more hectic and/or the temperature of the person may be higher. This applies vice versa. Several characteristics may be defined for determining the degree of tension of the posture, the degree of relaxation of the facial expression and/or the degree of hectic of the gesture. For example, for interpreting or evaluating the relaxation of the facial expression the state of the eyes and the state of the mouth may be defined as characteristics for determining the degree of relaxation of the facial expression.

The same may apply for determining the health level of the person and the tiredness level of the person. In particular, the higher the health level of the person, the better is the health of the person. The higher the tiredness level of the person, the more tired is the person.

In particular, the processing unit may determine whether the stress level of the person is above a stress level threshold or not. In case the processing unit determines that the stress level is equal to or above the stress level threshold, the processing unit may determine that the person is stressed. In case the processing unit determines that the stress level is below the stress level threshold, the processing unit may determine that the person is relaxed. The same may apply for the health level of the person and the tiredness level. That is, the processing unit may determine whether the health level of the person is below a health level threshold or not. In case the processing unit determines that the health level is equal to or below the health level threshold, the processing unit may determine that the person is sick. In case the processing unit determines that the health level is above the health level threshold, the processing unit may determine that the person is healthy. The processing unit may determine whether the tiredness level of the person is above a tiredness level threshold or not. In case the processing unit determines that the tiredness level is equal to or above the tiredness level threshold, the processing unit may determine that the person is tired. In case the processing unit determines that the tiredness level is below the tiredness level threshold, the processing unit may determine that the person is lively respectively not tired.

In an implementation form of the first aspect, the processing unit is configured to, by processing the detection results of the one or more sensors, identify the person. In addition or alternatively, the processing unit may be configured to, by processing the detection results of the one or more sensors, determine whether the person is present or not in the working environment. In addition or alternatively, the processing unit may be configured to, by processing the detection results of the one or more sensors, determine a tidiness level of the working table present in the working environment. In addition or alternatively, the processing unit may be configured to, by processing the detection results of the one or more sensors, determine whether the computer present in the working environment is in the use mode or locked mode.

Identifying the person allows the processing unit to adjust the level of assistance to the identified person in response to the determined condition of the working environment and/or condition of the person. That is, the processing unit may be configured to identify the person in order to perform the action in dependence on the individual person being identified.

In particular, the action may comprise or correspond to informing at the luminaire about the condition of the working environment and/or the condition of the person, in particular by controlling a change of a light emission by the luminaire. In addition or alternatively, the action may comprise or correspond to controlling, in dependence on the condition of the working environment and/or the condition of the person, a light emission by the luminaire, an operation of one or more building management devices, and/or an operation of the computer present in the working environment. The one or more building management devices may comprise or correspond to one or more devices of a heating and/or cooling system, devices of a ventilation system, further lighting devices and/or window blinds.

With other words, in response to the determined condition of the working environment and/or the determined condition of the person, the processing unit may locally at the luminaire inform (in particular the person when the person is present in the working environment) about the condition of the working environment and/or the condition of the person. Additionally or alternatively, the processing unit may intervene in the working environment by controlling the lighting of the luminaire, the one or more building management devices having an impact on the working environment and/or the operation of the computer present in the working environment.

In particular, the processing unit may inform at the luminaire about the condition of the working environment and/or the condition of the person by controlling the lighting of the luminaire. For example, the processing unit may control the lighting of the luminaire, such that the light intensity changes, in particular increases and/or decrease, for a time period and optionally according to a pattern (e.g. flashing light).

In particular, the processing unit may be configured to provide respective control signals to the one or more building management devices and/or the computer. This may be done wirelessly or wired, preferably via a bus.

In an implementation form of the first aspect, the luminaire comprises a communication unit for communication. The communication unit may preferably be configured for wireless communication. The action may comprise or correspond to communicating, using the communication unit, information about the condition of the working environment and/or the condition of the person to a central control unit, the computer present in the working environment, at least one electronic device of the person, and/or a remote person. The at least one electronic device may comprise or correspond to a smart phone, a tablet computer, a smart watch and/or a laptop computer.

In particular, the communication unit may comprise or correspond to a transmitting unit configured to transmit signals comprising information about the condition of the working environment and/or the condition of the person to the central control unit, the computer, the at least one electronic device and/or a remote person. Optionally, the communication unit may also comprise or correspond to a receiving unit configured to receive signals from outside the luminaire. The communication unit may be configured for a wireless communication, in particular using Bluetooth, Near-Field-Communication (NFC), infrared light (IR), wireless LAN (e.g. Wi-Fi) etc. Alternatively or additionally, the communication may be wired, that is across one or more wires, in particular via a bus. In particular, the communication maybe via the internet, the telephone network and/or the mobile network (cellular network).

The central control unit may be implemented by cloud computing. The central control unit may comprise or correspond to a processor, a microprocessor, a controller, a microcontroller, a field programmable gate array (FPGA), an application specific integrated circuit (ASIC) or any combination of them.

The remote person may be a supervisor of the working environment, the boss of the person of the working environment, a person of a rescue service, a person of facility management service, a person of a cleaning service etc.

In an implementation form of the first aspect, in case the processing unit determines that the sitting position of the person deviates from a target sitting position, the processing unit is configured to inform at the luminaire about the sitting position deviating from the target sitting position. In particular, the processing unit may be configured to inform at the luminaire by changing the light emission by the luminaire. In addition or alternatively, in case the processing unit determines that the sitting position of the person deviates from the target sitting position, the processing unit may be configured to communicate information about the sitting position deviating from the target sitting position to the central control unit, the computer present in the working environment, the at least one electronic device of the person, and/or the remote person.

This allows to inform the person about his sitting position and, thus, allows the person to correct his sitting position, which reduces or prevents problems, such as back pain, caused by a bad sitting position.

According to an embodiment, in case the processing unit determines that the sitting position of the person deviates from the target sitting position, the processing unit may be configured to control a change of the light emission of the luminaire, in particular as outlined already above. This change of the light emission may be perceived by the person as an alert. In response to this, the person may adapt his sitting position.

In addition or alternatively, the information about the sitting position deviating from the target sitting position may be communicated to the central control unit, the computer, the at least one electronic device and/or the remote person. In response to receiving this information, the computer and/or the at least one electronic device may inform the person about the sitting position deviating from a target sitting position by displaying on a display information. Such displayed information may comprise or correspond to the information about the wrong sitting position, an instruction instructing the person to change the sitting position and/or information informing the person on how to change the sitting position to be within a range of the target sitting position.

In response to receiving the information about the sitting position deviating from the target sitting position, the central control unit may forward this information to the computer, the at least one electronic device of the person and/or the remote person. In addition or alternatively, the central control unit may provide this information in case of receiving a request for it.

In an implementation form of the first aspect, in case the processing unit determines the stress level, the tiredness level and/or the health level of the person, the processing unit is configured to inform at the luminaire about the stress level of the person above a threshold stress level, the tiredness level of the person above a threshold tiredness level and/or the health level of the person below a health level threshold. In particular, the processing unit may be configured to inform at the luminaire by changing the light emission by the luminaire. In addition or alternatively, in case the processing unit determines the stress level, the tiredness level and/or the health level of the person, the processing unit may be configured to communicate information about the stress level, the tiredness level and/or the health level of the person to the central control unit, the computer present in the working environment, the at least one electronic device of the person, and/or the remote person. In addition or alternatively, in case the processing unit determines the stress level, the tiredness level and/or the health level of the person, the processing unit may be configured to control, in dependence on the stress level, the tiredness level and/or the health level of the person, the light emission by the luminaire, the operation of the one or more building management devices, and/or the operation of the computer present in the working environment.

In particular, in case the processing unit determines that the stress level is above the stress level threshold, the tiredness level is above the tiredness level threshold and/or the health level is below the health level threshold, the processing unit may be configured to inform at the luminaire about this condition of the person by controlling a change of the light emission of the luminaire, in particular as outlined already above.

In addition or alternatively, the processing unit may be configured to control the light emission by the luminaire, the operation of the one or more building management devices and/or the operation of the computer in dependence on the stress level, tiredness level and/or health level of the person. For example, in case the processing unit determines that the person is tired, the processing unit may increase the light emission by the luminaire in order to increase the brightness of the working environment and/or change the characteristic of the emitted light, e.g. adjust the color temperature of the light. In addition or alternatively, the processing unit may control one or more devices of a heating and/or cooling system such that the room temperature is reduced. In addition or alternatively, the processing unit may control one or more window blinds such that more light may enter via the windows in order to increase the brightness of the working environment. In addition or alternatively, the processing unit may control one or more further lighting devices to increase the light emission in order to increase the brightness of the working environment. In addition or alternatively, the processing unit may control one or more devices of a ventilation system in order to provide fresh air to the working environment. This control may be performed by the processing unit in dependence on the condition of the working environment, e.g. in dependence on the lighting in the working environment, the temperature of the working environment etc.

For example, in case the processing unit determines that the person is stressed, the processing unit may control the operation of the computer such that the computer is locked for a time period, e.g. 30 minutes, and optionally instructs the person to make a break and/or perform a stretching for the time period or to finish the work for the day. This helps to prevent a burn-out that is caused by stress.

In case the processing unit determines that the person is sick, e.g. by evaluating the body temperature of the person based on detection results of one or more temperature sensors configured to measure the body temperature of the person, the processing unit may control the operation of the computer such that the person is locked and instructs the person to go home. This reduces the risk of a person overworking himself while being sick as well as of persons working in the vicinity to be infected by the sick person. In addition or alternatively, the processing unit may be configured to inform a supervisor of the working environment or the boss of the person about the fact that the person is sick. This allows the supervisor or boss to make sure that the person being sick goes home.

In an implementation form of the first aspect, the processing unit is configured to determine whether the health level of the person is below a health level threshold, and request help in case the health level of the person is below the health level threshold. In particular, the processing unit maybe configured to request a rescue service (i.e. requesting first aid) in case the health level of the person is below the health level threshold.

For example, in case the one or more sensors of the luminaire detect that the person is lying on the floor, then the processing unit may determine on the basis of the detections results of the one or more sensors, that the person is not sitting or standing in front of the working table but lying on the floor. Optionally, the processing unit may additionally determine the facial expression of the person lying on the floor. On the basis of the determination that the person lies on the floor and optionally the determined facial expression the processing unit may be configured to determine that the health level of the person is below a critical health level threshold, e.g. the person has fainted. In response thereto, the processing unit may be configured to request help. In particular, the processing unit maybe configured to request a rescue service. This significantly increases the safety of the person working in the working environment when being in the office at a late time of day, when no colleagues are present anymore.

In an implementation form of the first aspect, in case the processing unit determines the tidiness level of the working table, the processing unit is configured to communicate information about the tidiness level to the central control unit, the computer present in the working environment, the at least one electronic device of the person, and/or the remote person. In particular, in case the processing unit determines the tidiness level of the working table to be below a tidiness level threshold, the processing unit may be configured to communicate information about the tidiness level to the central control unit, the computer present in the working environment, the at least one electronic device of the person, and/or the remote person.

In other words, in case the processing unit determines that the working table is untidy, the processing unit may inform this condition of the working table to the central control unit, the computer, the electronic device and/or the remote person. In this case, the remote person may be a person of a cleaning service.

In response to receiving this information, the computer and/or the at least one electronic device may inform the person about the untidy working table by displaying on a display the information about the untidy working table, and/or an instruction instructing the person to clean up the working table. In response to receiving this information, the central control unit may forward this information to the computer, the at least one electronic device of the person and/or the remote person. In addition or alternatively, the central control unit may provide this information in case of receiving a request for it.

In an implementation form of the first aspect, in case the processing unit determines that the person is not present in the working environment and the computer present in the working environment is in the use mode, the processing unit is configured to communicate information about the absence of the person and optionally the use mode of the computer to the central control unit, the computer present in the working environment, the at least one electronic device of the person, and/or the remote person. In addition or alternatively, in case the processing unit determines that the person is not present in the working environment and the computer present in the working environment is in the use mode, the processing unit may be configured to control the operation of the computer such that the mode of the computer is changed from the use mode to the locked mode.

In particular, the processing unit may be configured to control the operation of the computer such that the mode of the computer is changed from the use mode to the locked mode in case the person is not present in the working environment and a foreign person is approaching the computer. In this case, the processing unit may be configured to identify the person and, thus, determine whether the person or a foreign person is approaching. In addition or alternatively, in case a foreign person tries to access the computer, the processing unit may be configured to inform the person, e.g. by communicating information to an electronic device (such as mobile phone or smart watch) of the person, about this situation.

This allows to protect confidential information stored on the computer from being seen by persons that are not allowed to see the confidential information.

In an implementation form of the first aspect, the luminaire is a free standing luminaire configured to be positioned in the working environment. In particular, the luminaire maybe a free standing luminaire configured to be positioned on the floor next to the working table or on the working table.

Alternatively, the luminaire may be a different type of luminaire, such as a ceiling luminaire, hanging luminaire, wall luminaire etc.

In order to achieve the luminaire according to the first aspect of the present disclosure, some or all of the above described implementation forms and optional features may be combined with each other.

According to a second aspect of the present disclosure, a system for providing lighting to a working environment, in particular to a working table, of a person and monitoring a condition of the working environment and/or a condition of the person is provided. The system comprises one or more luminaires according to the first aspect or any of its implementations forms, as described above.

The system further comprises a central control unit configured to, preferably wirelessly, receive information about the condition of the working environment and/or the condition of the person from the processing unit of the one or more luminaires. The central control unit is configured to perform an action in dependence on the condition of the working environment and/or the condition of the person.

In addition or alternatively, the system further comprises a computer present in the working environment configured to, preferably wirelessly, receive information about the condition of the working environment and/or the condition of the person from the processing unit of the one or more luminaires. The computer is configured to perform an action in dependence on the condition of the working environment and/or the condition of the person.

In particular, in addition to the one or more luminaires of the system, the optional central control unit and/or the optional computer are configured to perform in dependence on the condition of the working environment and/or the condition of the person the action, performable by the one or more luminaries.

The above description with regard to the luminaire according to the first aspect is also valid for the one or more luminaires of the system according to the second aspect. Moreover, the above description with regard to a central control unit and a computer present in the working environment is also valid for the optional central control unit and the optional computer of the system according to the second aspect.

The system according to the second aspect achieves the same advantages as the luminaire of the first aspect.

In an implementation form of the second aspect, the central control unit is configured to, based on the received information:
- determine a deviation of the condition of the working environment from a target condition of the working environment and/or a deviation of the condition of the person from a target condition of the person; and
- perform the action in case the deviation of the condition of the working environment from the target condition of the working environment and/or the deviation of the condition of the person from the target condition of the person is determined.

In addition or alternatively, the computer may be configured to, based on the received information:
- determine a deviation of the condition of the working environment from a target condition of the working environment and/or a deviation of the condition of the person from a target condition of the person; and
- perform the action in case the deviation of the condition of the working environment from the target condition of the working environment and/or the deviation of the condition of the person from the target condition of the person is determined.

In particular, the action performable by the central control unit based on the received information may comprise or correspond to informing at the one or more luminaires about the condition of the working environment and/or the condition of the person. In particular, the informing may be performed by controlling a change of the light emission by the one or more luminaires. In addition or alternatively, the action performable by the central control unit based on the received information may comprise or correspond to communicating information about the condition of the working environment and/or the condition of the person to a computer present in the working environment, at least one electronic device of the person, and/or a remote person. The communicating maybe a wirelessly communicating. In particular, the at least one electronic device of the person may comprise or correspond to a smart phone, a tablet computer, a smart watch and/or a laptop computer. In addition or alternatively, the action performable by the central control unit based on the received information may comprise or correspond to controlling, in dependence on the condition of the working environment and/or the condition of the person, a light emission by the one or more luminaires, an operation of one or more building management devices, and/or an operation of the computer present in the working environment. In particular, the one or more building management devices may comprise or correspond to one or more devices of a heating and/or cooling system, devices of a ventilation system, further lighting devices and/or window blinds.

That is, the central control unit may be configured to perform the same one or more actions with regard to informing, communicating information and controlling (except of communicating information to the central control unit) that are performable by the processing unit of the luminaire of the first aspect or any of its implementation forms. For a more detailed description thereof, reference is made to the corresponding description of the luminaire according to the first aspect or any of its implementation forms, outlined above.

In particular, the action performable by the computer based on the received information comprises or corresponds to informing the one or more luminaires about the condition of the working environment and/or the condition of the person. In particular, the informing maybe performed by controlling a change of the light emission by the one or more luminaires. In addition or alternatively, the action performable by the computer based on the received information comprises or corresponds to communicating information about the condition of the working environment and/or the condition of the person to a central control unit, at least one electronic device of the person, and/or a remote person. The communicating may be a wirelessly communicating. In addition or alternatively, the action performable by the computer based on the received information comprises or corresponds to controlling, in dependence on the condition of the working environment and/or the condition of the person, the light emission by the one or more luminaires, the operation of one or more building management devices, and/or its own operation. The at least one electronic device of the person and the one or more building management devices maybe as outlined above.

That is, the computer may be configured to perform the same one or more actions with regard to informing, communicating information and controlling (except of communicating information to the computer) that are performable by the processing unit of the luminaire of the first aspect or any of its implementation forms. For a more detailed description thereof, reference is made to the corresponding description of the luminaire according to the first aspect or any of its implementation forms, outlined above.

In an implementation form of the second aspect, in case the central control unit receives information about a health level of the person from the one or more luminaires, the central control unit is configured to determine whether the health level of the person is below a health level threshold. In addition or alternatively, in case the central control unit receives information about a health level of the person from the one or more luminaires, the central control unit may be configured to request help, in particular a rescue service, in case the health level of the person is below the health level threshold.

In other words, in addition or alternatively to the one or more luminaries of the system, the central control unit may be configured to request a rescue service, in case the health level of the person is below a critical health level threshold.

In addition or alternatively, in case the computer receives information about a health level of the person from the one or more luminaires, the computer may be configured to determine whether the health level of the person is below a health level threshold. In addition or alternatively, in case the computer receives information about a health level of the person from the one or more luminaires, the computer may be configured to request help, in particular a rescue service, in case the health level of the person is below the health level threshold.

In other words, in addition or alternatively to the one or more luminaries of the system, the computer may be configured to request a rescue service, in case the health level of the person is below a critical health level threshold.

In an implementation form of the second aspect, the computer is configured to display instructions in dependence on the received information.

In particular, in case the computer receives information about a sitting position of the person deviating from a target sitting position, the computer may be configured to display instructions instructing the person to adapt its sitting position to the target sitting position.

In particular, in case the computer determines based on the received information that a sitting position of the person deviates from a target sitting position, the computer maybe configured to display instructions instructing the person to adapt its sitting position to the target sitting position.

In case the information, received by the central control unit and/or the computer from the luminaire, indicates that the person is not present in the working environment and optionally indicates that the computer is in the use mode, the central control unit and/or the computer may be configured to control the operation of the computer such that the mode of the computer is changed from the use mode to the locked mode.

In order to achieve the system according to the second aspect of the present disclosure, some or all of the above described implementation forms and optional features may be combined with each other.

According to a third aspect of the present disclosure, a system for providing lighting to a working environment, in particular to a working table, of a person and monitoring a condition of the working environment and/or a condition of the person is provided. The system comprises one or more luminaires. Each luminaire of the one or more luminaires comprises one or more sensors configured to detect the person, when the person is present in the working environment, and/or the working environment. In addition, each luminaire of the one or more luminaires comprises a communication unit configured to communicate detection results of the one or more sensors to the outside of the luminaire. The communication may be in particularly wireless.

The system further comprises a central control unit configured to, preferably wirelessly, receive the detection results from the one or more luminaires. The central control unit is configured to monitor the condition of the working environment and/or the condition of the person on the basis of the received detection results by processing the received detection results. Further, the central control unit is configured to perform an action in dependence on the condition of the working environment and/or the condition of the person.

In addition or alternatively, the system further comprises a computer present in the working environment configured to, preferably wirelessly, receive the detection results from the one or more luminaires. The computer is configured to monitor the condition of the working environment and/or the condition of the person on the basis of the received detection results by processing the received detection results. Further, the computer is configured to perform an action in dependence on the condition of the working environment and/or the condition of the person.

The system according to the third aspect differs from the system according to the second aspect or any of its implementation forms in that the function and operation of the processing unit of the luminaire according to the first aspect or any of its implementation forms is not implemented any more in the one or more luminaires of the system of the third aspect but in the optional central control unit and/or the optional computer of the system of the third aspect. Therefore, the description with respect to the function and operation of the processing unit, in particular with respect to determining the condition of the working environment and/or the condition of the person by the processing unit as well as with respect to performing the action by the processing unit, of the luminaire according to the first aspect or any of its implementation forms is correspondingly valid for describing the function and operation of the central control unit and/or computer of the system according to the third aspect. That is, the optional central control unit of the system according to the third aspect may determine the condition of the working environment and/or the condition of the person and perform the action in dependence on the condition of the working environment and/or the condition of the person in the same way as the processing unit of the luminaire according to the first aspect or any of its implementation forms. The same applies for the optional computer of the system according to the third aspect.

The above description with respect to the system according to the second aspect or any of its implementation forms is correspondingly valid for describing the system according to the third aspect. In particular, the above description with regard to the action performable by the central control unit of the system according to the second aspect or any of its implementation forms based on the received information about the condition of the working environment and/or the condition of the person is correspondingly valid for the optional central control unit of the system according to the third aspect (in this case the action is performable by the central control unit based on the condition of the working environment and/or the condition of the person determined by the central control unit). In particular, the above description with regard to the action performable by the computer of the system according to the second aspect or any of its implementation forms based on the received information about the condition of the working environment and/or the condition of the person is correspondingly valid for the optional computer of the system according to the third aspect (in this case the action is performable by the computer based on the condition of the working environment and/or the condition of the person determined by the computer).

The system according to the third aspect achieves the same advantages as the luminaire of the first aspect.

In an implementation form of the third aspect, the central control unit is configured to:
- determine a deviation of the condition of the working environment from a target condition of the working environment and/or a deviation of the condition of the person from a target condition of the person; and
- perform the action in case the deviation of the condition of the working environment from the target condition of the working environment and/or the deviation of the condition of the person from the target condition of the person is determined.

In addition or alternatively, the computer may be configured to:
- determine a deviation of the condition of the working environment from a target condition of the working environment and/or a deviation of the condition of the person from a target condition of the person; and
- perform the action in case the deviation of the condition of the working environment from the target condition of the working environment and/or the deviation of the condition of the person from the target condition of the person is determined.

In order to achieve the system according to the third aspect of the present disclosure, some or all of the above described implementation forms and optional features may be combined with each other.

In the following, the invention is described exemplarily with reference to the enclosed Figures, in which
- **Figure 1**: is a block diagram showing a luminaire according to an embodiment of the present invention for providing lighting to a working environment of a person. The luminaire may form with an optional computer present in the working environment and/or an optional central control unit a system for providing lighting to the working environment of the person;
- **Figure 2**: is a schematic side view showing two sitting positions of a person present in a working environment, and which a luminaire according to an embodiment of the present invention is positioned;
- **Figure 3**: is a schematic side view of a working environment of a person, in which a luminaire according to an embodiment of the present invention is positioned. On the right side, three examples of a condition of the person are shown.
- **Figure 4**: is a schematic side view of a working environment of a person, in which a luminaire according to an embodiment of the present invention is positioned, wherein the person is not present in the working environment.

In the Figures, corresponding elements have the same reference signs. The proportions and dimensions of the elements (e.g. luminaire, working table, computer) shown in the Figures do not represent the elements to scale, but are merely chosen to describe the structure and operation of the elements.

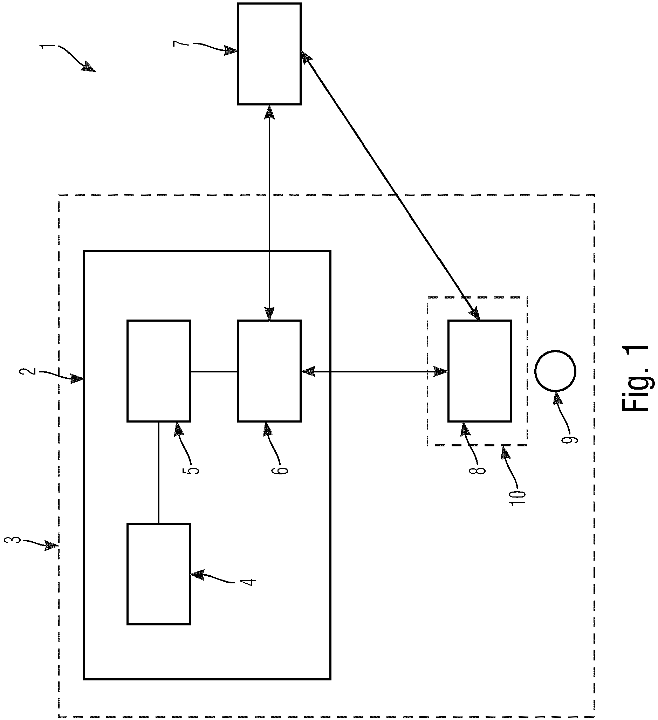

**Figure 1** is a block diagram showing a luminaire according to an embodiment of the present invention for providing lighting to a working environment of a person. The luminaire may form with an optional computer present in the working environment and/or an optional central control unit a system for providing lighting to the working environment of the person.

The above description with regard to the luminaire of the first aspect or any of its implementation forms is valid for the luminaire 2 shown in Figure 1.

As indicated in Figure 1, the luminaire 2 comprises one or more sensors 4, a processing unit 5 and an optional communication unit 6. The one or more sensors 4 are configured to detect a working environment 3 of a person 9 and/or detect the person 9, when the person is present in the working environment 3 (as it is the case in Figure 1). In particular, the one or more sensors 4 may be configured to detect a working table 8 present in the working environment 3 and a computer 8 present on the working table 10.

As indicated in Figure 1 by a line, the processing unit 5 is configured to receive the detection results of the one or more sensors 4. The processing unit 5 is configured to monitor a condition of the working environment 3 and/or a condition of the person 9 on the basis of the detection results by processing the detection results. In particular, the processing unit 5 may be configured to determine the condition of the working environment 3 and/or the condition of the person 9 on the basis of the detection results by processing the detection results. The processing unit 5 may be configured to communicate with an optional central control unit 7 and the computer 8 using the optional communication unit 6. That is, the processing unit 5 maybe configured to control the optional communication unit 6 for communicating with the central control unit 7 and the computer 8. In particular, the processing unit 5 may be configured to communicate, using the communication unit 6, information about the determined condition of the working environment 3 and /or the determined condition of the person 3.

The one or more sensors 4, the processing unit 5 and the communication unit 6 may be connected to a bus, such as a DALI bus or DALI-2 bus, for transmitting signals between each other (not shown in Figure 1). Such signals may comprise or correspond to e.g. detection signals from the one or more sensors 4 to the processing unit 5 and control signals from the processing unit 5 to the communication unit 6.

The luminaire may comprise further components not shown in Figure 1, in particular one or more lighting sources for providing the lighting of the luminaire 2. The processing unit 5 may be configured to control such further components and such further components may also be connected to the optional bus of the luminaire 2.

For a detailed description of the one or more sensors 4, the processing unit 5, the optional communication unit 6 and the optional bus (not shown in Figure 1) reference is made to description of the one or more sensors, the processing unit, the optional communication unit and the optional bus of the luminaire according to the first aspect or any of its implementation forms, outlined above.

As indicated in Figure 1, for providing lighting to the working environment 3 of the person 9 and monitoring the condition of the working environment 3 and the condition of the person 9 the luminaire 2 is arranged, in particular positioned or installed, in the working environment 3.

The luminaire 2 in combination with the central control unit 7 and/or the computer 8 may form a system 1 for providing lighting to the working environment 3 of the person 9 and monitoring the condition of the working environment 3 and the condition of the person 9.

In the system 1, in response to the processing unit 5 of the luminaire 2 determining the condition of the working environment 3 and/or the condition of the person 9, the luminaire 2, the optional central control unit 7 and/or the computer 8 may perform an action in dependence on the condition of the working environment 3 and/or the condition of the person 9. The action in particular may have an influence on the condition of the working environment 3 and/or the condition of the person, as outlined above. In the case of the central control unit and/or the computer 8, the action is performed based on information about the condition of the working environment 3 and/or the condition of the person 9 that is received from the processing unit 5 of the luminaire 2.

As indicated in Figure 1 by the double arrows, the luminaire 2, the central control unit 7 and the computer 8 may communicate with each other. In particular, they may wirelessly communicate with each other, e.g. using Bluetooth, Near-Field-Communication (NFC), infrared light (IR), wireless LAN (e.g. Wi-Fi) etc.

The luminaire 2 may be configured to locally inform the person 9 about the condition of the working environment 3 and/or the condition of the person 9. The luminaire 2 may do this by changing its light emission, for example, emitting flashed light for a time period or turning the lighting on, in case the lighting is turned off. Therefore, the luminaire 2 may visually warn the person 9 about an undesired condition of the working environment 3 and/or an undesired condition of the person 9. For example, in case the person 9 is sitting in an undesired sitting position (e.g. round back) that may lead in a long term to health problems (e.g. back pain) or the person 9 is stressed because of taking to less breaks while working, the luminaire 2 may locally inform the person 9 about this undesired condition by changing its light emission.

In addition or alternatively, the luminaire 2 may communicate (in particular using the optional communication unit 6) information about the condition of the working environment 3 and/or the condition of the person 9 determined by the processing unit 5 to the central control unit 7, the computer 7, at least one electronic device of the user 9 (not shown in Figure 1) and/or a remote person (not shown in Figure 1). This allows one or more of the aforementioned to use the information about the condition of the working environment 3 and/or the condition of the person 9 to perform itself an action in response to the condition of the working environment 3 and/or the condition of the person 9. For example, the computer 8 receiving information about an undesired sitting position of the person 9 (as information about the condition of the person 9) may display on its display information. This information may comprise or correspond to infromation informing the person 9 about the undesired sitting position, an instruction instructing the person 9 to adapt the sitting position and/or information informing the person 9 on how to adapt the sitting position so that it corresponds to a target sitting position (that is recommended by doctors for reducing health problems caused by long sitting). The same may be true for an electronic device of the person 9, such as a smart watch and/or a smart phone, which may display on its display information, such as the aforementioned information. Such an electronic device, e.g. smart watch and/or smart phone, may in addition or alternatively inform the person 9 about the condition of the working environment 3 and/or the condition of the person 9 using different means, e.g. emitting acoustic, performing vibration etc.

Further, for example, the central control unit 7 and/or the computer 8 receiving information about a health condition of the person 9, e.g. the health level of the person 9 determined by the processing unit 5 is below a critical health level threshold that requires requesting rescue service, may be configured to directly request the rescue service with information about the condition and position (address of the working environment) of the person 9. In addition or alternatively, the central control unit 7 and/or the computer 8 may inform a remote person, such as a supervisor, boss or first aider, present in the working environment 3 or nearby the working environment, e.g. in the same building, about the condition of the person 9. In addition or alternatively, the luminaire 2 itself may be configured to directly request the rescue service.

In addition or alternatively, the luminaire 2, in particular the processing unit 5, may control the lighting of the luminaire 2, the operation of one or more building management devices (not shown in Figure 1) and/or the operation of the computer 8.

For example, in case the processing unit 5 determines that the person 9 working in the working environment is tired (as a condition of the person 9), e.g. the processing unit 5 determines that the tiredness level of the person 9 is above a tiredness level threshold, the processing unit 5 may be configured to control the light emission of the luminaire 2 such that the light emission is increased making the working environment 3 brighter. In addition or alternatively, the processing unit 5 may be configured to control one or more devices of a heating and/or cooling system such that the temperature of the working environment 3 is reduced. In addition or alternatively, the processing unit 5 may control one or more devices of a ventilation system in order to provide fresh air to the working environment 3. In case the processing unit 5 determines that the tiredness level of the person is so high that the concentration of the person 9 is severely reduced and, thus, mistakes may occur more likely during working, the processing unit 5 may be configured to lock the computer 8 for a time period and/or make the computer 8 display on its display an instruction instructing the person to stop working and to take a break and/or to do stretching.

The aforementioned action regarding the communication by the luminaire 2 and the control by the luminaire 2 of the light emission by the luminaire 2 and other entities (such as building management devices and/or the computer 8) may in addition or alternatively be performed by the central control unit 7 and/or the computer 8.

Therefore, the system 1 provides a network that allows to monitor the condition of the working environment 3 and/or the condition of the person 9 and to react to the determined condition by performing a respective action, as outlined above.

The above description with respect to the luminaire of the first aspect or any of its implementation forms as well as the above description with respect to the system according to the second aspect or any of its implementation forms is valid for the system 1. In particular, for describing the central control unit 7 and the computer 8 reference is made to the above description of the central control unit and computer with regard to the luminaire of the first aspect or any of its implementation forms and system of the second aspect or any of its implementation forms.

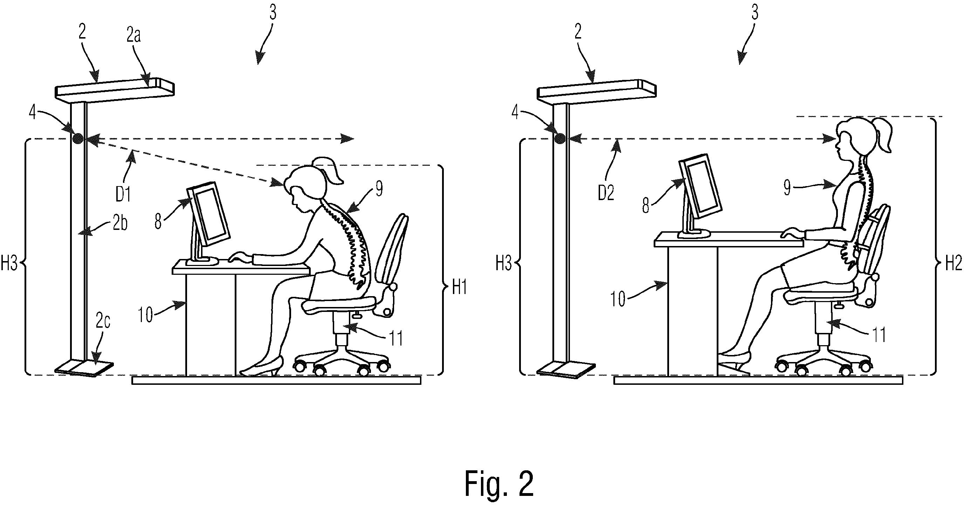

**Figure 2** is a schematic side view showing two sitting positions of a person present at a working environment, at which a luminaire according to an embodiment of the present invention is positioned.

The luminaire 2 of Figure 2 may correspond to the luminaire 2 of Figure 1 and, thus, the description of the luminaire 2 of Figure 1 is also valid for the luminaire 1 of Figure 2. Figure 2 shows two different conditions of the person 9, when the person 9 is working in the working environment 3 with the computer 8 present on the working table 10. A possible location of at least one sensor of the one or more sensors 4 of the luminaire 2 at the luminaire 2 is shown. This is only by way of example and does not limit the present disclosure.

According to Figure 2 the luminaire 2 is a free standing luminaire. This is only by way of example and does not limit the present disclosure. That is, the luminaire 2 may also be of a different luminaire type, e.g. a hanging luminaire that is installed at the ceiling above the working environment 3, in particular above the working table 10 and/or the area at which the person is sitting when working at the working table 10. The one or more sensors of the luminaire 4 may be positioned at the stand part 2b of the luminaire 2 (as indicated in Figure 2), the base part 2c and/or the head/top part 2a of the luminaire 2. At the head/top part 2a of the luminaire 2 the one or more light sources for providing the lighting of the luminaire 2 may be arranged.

On the left side of Figure 2, a first posture of the person 9 resulting in a first sitting positon of the person 9 is shown, according to which the person 9 sits on a chair 11 such that the back is round and the head is bend forwards. This first sitting position is an undesired sitting position because the first posture of the person 9 may lead to back problems in a long term, in particular in case the person has a deskjob, i.e. a job that is mainly done while sitting. On the right side of Figure 2, a second posture of the person 9 resulting in a second sitting positon of the person 9 is shown, according to which the person 9 sits on the chair 11 such that the back is straight and the head is not bend forward. This second sitting position is a target/desired sitting position because the second posture of the person may reduce the risk of problems with the back, e.g. such as back pain.

As indicated in Figure 2, the one or more sensors 4 may be configured to detect, whether in the horizontal direction from the position of installation at the luminaire 2 the person 9, in particular a body part, e.g. the head, of the person 9, is present or not. For this, simple sensors may be used that are configured to detect the presence of an object, in particular a body part, in a direction. For example photoelectric sensors, radar sensors, infrared sensors etc. may be used.

In addition or alternatively, the one or more sensors 4 may be configured to measure a distance to a body part, e.g. the head, of the person 9. For this, simple sensors may be used that are configured to measure the distance. For example, radar sensor maybe used.

Thus, a more complex implementation using one or more cameras and/or one or more video cameras as well as image processing by the processing unit is not necessary for determining the posture and sitting position of the person 9. Nevertheless, this is also a possible implementation form encompassed by the present disclosure, as outlined above.

The processing unit of the luminaire 2 may determine, by processing the detection results of the one or more sensors 4, the distance to the head of the person 9 and/or an indicator of the height of the head of the person 9 above ground. For example, in the case of Figure 2, the processing unit 9 may be configured to determine that the height of the head of the person 9 above ground is less than the height H₃ of the positon of the one or more sensors 4 above ground, in case the detection signal received from the one or more sensors 4 indicates that no body part of the person 9 is detected. This case is shown on the left side of Figure 2, when the person is sitting with a round back and the person's head is bend forwards and, thus, the height from the top of the head to ground corresponds to a first height H1 that is smaller than the height H₃ of the one or more sensors 4 above ground.

Accordingly, in the case of Figure 2, the processing unit 9 may be configured to determine that the height of the head of the person 9 above ground is greater than the height H₃ of the positon of the one or more sensors 4 above ground, in case the detection signal received from the one or more sensors 4 indicates that the head of the person 9 is detected. This case is shown on the right side of Figure 2, when the person is sitting with a straight back and the person's head is not bend forwards and, thus, the height from the top of the head to ground corresponds to a second height H2 that is greater than the height H₃ of the one or more sensors 4 above ground.

For detecting more precisely the height of the head of the person 9 above ground, a plurality of sensors maybe positioned along the vertical axis of the stand part 2b of the luminaire 2. In dependence on which of the sensors detect a body part of the person 9, the processing unit may determine, by processing the detection results of the plurality of sensors, the height from the top of the person's head to ground in steps depending on the number of sensors detecting a body part and the distant between them in the vertical direction.

In addition or alternatively, the processing unit may determine the distance from the luminaire 2, in particular from the one or more sensors 4, to the head of the person 9 by processing the detection results. As shown in Figure 2, in case the person 9 sits with a round back and the head bend forwards, the distance from the one or more sensors 4 to the head is a first distance Di, which is smaller than a second distance D2 between the one or more sensors 4 and the head when the person 9 sits straight without the head bend forwards.

As a result, the processing unit 5 of the luminaire 2 may be configured to determine based on the height of the person's head above ground and/or the distance to the head the posture and, thus, the sitting position of the person 9. In particular, the processing unit of the luminaire 2 may be configured to determine whether the posture of the person corresponds to a target posture or is within a range of the target posture (shown on the right of Figure 2) or to a posture that is outside a range of the target posture (shown on the left of Figure 2). Thus, the processing unit may be configured to determine whether the sitting position of the person 9 corresponds to the target sitting position (right side of Figure 2) or whether the sitting position deviates from the target sitting positon (left side of Figure 2). Therefore, the processing unit is configured to determine a condition of the person 9 by processing the detection results of the one or more sensors 4. In particular, the processing unit may be configured to determine whether the condition of the person 9 deviates from a target condition of the person 9.

In response to determining the condition of the person 9, in case of Figure 2 the sitting position of the person 9, the processing unit of the luminaire 2 is configured to perform an action in dependence on that condition of the person. The processing unit may be configured to control a change of the light emission in case the processing unit determines that the sitting position of the person 9 deviates from the target sitting position (which is the case with the first sitting positon shown on the left side). For example, the processing unit may control the luminaire 2 such that the luminaire emits flashed light that informs respectively warns the person 9 about the first sitting position deviating from the target sitting position and, thus, about the unhealthy sitting position, exemplarily shown on the left of Figure 2. In addition or alternatively, the luminaire 2 may communicate information about the sitting position of the person to the computer 8 present in the working environment 3 of the person. The computer 8 may display information about an undesired sitting position, an instruction instructing to adapt the sitting position and/or information informing on how the adapting the sitting positon to the person 9. In addition or alternatively, the action performable by the luminaire 2 and/or the computer 8 in dependence on the condition of the person 9, in particular on the sitting positon of the person 9, may comprise and/or correspond to further actions as outlined above. For this, reference is made to the above description of the luminaire according to the first aspect or any of its implementation forms, the system according to the second aspect or any of its implementation forms and the luminaire 2 as well as the system 1 of Figure 1.

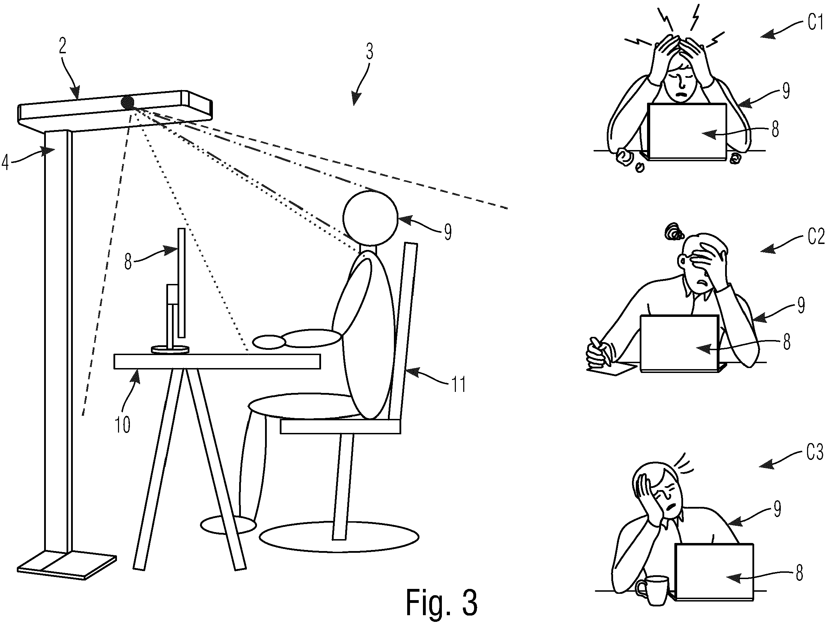

**Figure 3** is a schematic side view of a working environment of a person, at which a luminaire according to an embodiment of the present invention is positioned. On the right side three examples of a condition of the person are shown.

The luminaire 2 of Figure 3 may correspond to the luminaire 2 of Figures 1 and 2 and, thus, the description of Figures 1 and 2 is correspondingly valid for the luminaire 2 of Figure 3.

As indicated in Figure 3, the one or more sensors 4 of the luminaire 2 are configured to detect the person 9 and the working environment 3 of the person 9. By stripped lines a detection range of the one or more sensors 4 is exemplarily shown, which does not limit the present disclosure. In particular, as indicated in Figure 3 by stripped dotted and dotted lines the one or more sensors 4 maybe configured to detect the face of the person 9 as well as the shoulders, arms and hands of the person 9.

Therefore, the processing unit of the luminaire 2 may be configured to determine the posture, the facial expression and/or gesture of the person 9 by processing the detections results respectively detections signals received from the one or more sensors 4. In particular, the processing unit maybe configured to determine the facial expression of the person 9 by processing the detection results regarding the face of the person. In particular, the processing unit may be configured to determine the gesture of the person by processing the detection results regarding the shoulders, arms and hands of the person 9.

Preferably, the one or more sensors 4 of the luminaire 2 comprise or correspond to one or more cameras and/or video cameras configured to take images of the working environment 3 and the person 9, in particular of the face, shoulder, arms and hands of the person 9. In this case, the processing unit of the luminaire may be configured to determine the posture, facial expression and/or gesture of the person by image processing of image data received from the one or more cameras and/or video cameras.

The processing unit may be configured to determine a stress level, a tiredness level and/or health level based on the facial expression, posture, gesture and/or temperature of the person.

On the right side three different conditions C1, C2, C3 of the person 9 are exemplarily shown. According to the first condition C1, the stress level of the person 9 is above a critical stress level threshold, which indicates that the person 9 is effected by a professional burn-out. Characteristics of the facial expression (e.g. compressed eyes, compressed lips, tensioned face pulls), the gesture (e.g. hectic movements, unusual body movement or hand gesture indicating any sign of burn-out or stress, not shown in Figure 3) and/or the posture (e.g. body is pulled, head is put into hands, head sunk downwards) that are indicative for a burn-out may be defined. Such characteristics allow the processing unit to determine on the basis of image data whether the stress level of the person 9 is above the critical stress level threshold.

According to the second condition C2, the stress level of the person 9 is above a further stress level threshold, which is below the critical stress level. Thus, the second condition C2 of the person 9 does not correspond to a burn-out but merely to a stressed condition, that is the person 9 is stressed. Characteristics of the facial expression, the gesture and/or the posture that are indicative for a stressed person, which does not have a burn-out, may be defined. Such characteristics allow the processing unit to determine on the basis of image data whether the stress level of the person 9 is above the further stress level threshold and, thus, whether the person is stressed.

According to the third condition C3, the tiredness level of the person is above a tiredness level threshold, which indicates that the person is tired. Characteristics of the facial expression (e.g. closed eyes, relaxed facial pulls), the gesture (e.g. no movement of arms, hands) and/or the posture (e.g. body is relaxed) that are indicative for a tired, in particular sleeping, person may be defined. Such characteristics allow the processing unit to determine on the basis of image data whether the tiredness level of the person 9 is above the tiredness level threshold and, thus, whether the person is tired.

In response to having determined the stress level, the tiredness level and/or the health level of the person 9, the processing unit of the luminaire 2 is configured to perform an action in dependence on the determined stress level, tiredness level and/or health level of the person 9. For a detailed description of this, reference is made to the above description of the luminaire according to the first aspect or any of its implementation forms, the system according to the second aspect or any of its implementation forms, the luminaire 2 as well as the system 1 of Figure 1 and the luminaire 2 of Figure 2.

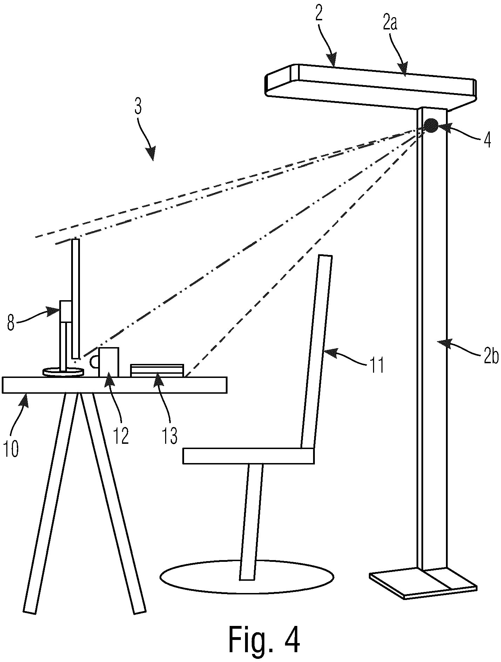

**Figure 4** is a schematic side view of a working environment of a person, at which a luminaire according to an embodiment of the present invention is positioned, wherein the person is not present in the working environment.

The luminaire 2 of Figure 4 may correspond to the luminaire 2 of Figures 1, 2 and 3 and, thus, the description of Figures 1, 2 and 3 is correspondingly valid for the luminaire 2 of Figure 4.

As indicated in Figure 4 the one or more sensors 4 of the luminaire 2 are configured to detect the working environment 3, in particular the working table 10 and the computer 8. By stripped lines a detection range of the one or more sensors 4 is exemplarily shown, which does not limit the present disclosure. Thus, the one or more sensors 4 may be configured to detect the surface of the working table 10 and, thus, objects present on the working table 10, e.g. the computer 8, a cup 12, a book or stack of papers 13 etc. In particular, as indicated in Figure 4 by stripped dotted lines the one or more sensors 4 may be configured to detect the display of the computer 8.

Therefore, the processing unit of the luminaire 2 may be configured to determine, by processing the detections results respectively detections signals received from the one or more sensors 4:
- a condition of the working table 10 present in the working environment 3, in particular a tidiness level of the working table 10, and/or
- a condition of the computer 8 present on the working table 10 with regard to a use mode or a locked mode.

As shown in Figure 4, the luminaire does not need to be positioned in front of the working table (shown in Figures 2 and 3), but may also be positioned at a different position, such as behind the chair 11 (as shown in Figure 4). That is, the luminaire 2 may be positioned in the working environment 3 or nearby the working environment 3 at any position, as long as the luminaire 2 is able to provide lighting to the working environment 3 and monitor the condition of the person 9 (when the person is present in the working environment 3) and/or the condition of the working environment 3. The operation of the luminaire 2 described below may also be carried out in case the luminaire 2 is positioned differently than shown in Figure 4. In this case, the one or mores sensors may be positioned differently at the luminaire 2, for example at the head/top part 2a of the luminaire 2 in addition or alternatively to being positioned at the stand part 2b of the luminaire 2.

In particular, in case the processing unit of the luminaire 2 determines that the person 9 is not present in the working environment 3 and the computer 8 is in the use mode, the processing unit may be configured to communicate information about the absence of the person 9 and optionally the use mode of the computer 8 to a central control unit, the computer 8, the at least one electronic device of the person, and/or the remote person. The computer 8 receiving such information may be configured to change its mode from the use mode to the locked mode.

In addition or alternatively, in case the processing unit of the luminaire 2 determines that the person 9 is not present in the working environment 3 and the computer 8 is in the use mode, the processing unit of the luminaire 2 may be configured to control the operation of the computer 8 such that the mode of the computer 8 is changed from the use mode to the locked mode.

In response to having determined that the person 9 is not present in the working environment 3 and the computer 8 is in the use mode, the processing unit of the luminaire 2 is configured to perform an action. For a detailed description of this, reference is made to the above description of the luminaire according to the first aspect or any of its implementation forms, the system according to the second aspect or any of its implementation forms, the luminaire 2 as well as the system 1 of Figure 1 and the luminaire 2 of Figure 2.

In this case, the one or more sensors may comprise or correspond to one or more cameras and/or video cameras that may provide images of the working table in the form of image data and the processing unit may be configured to perform an image processing method for determining whether the computer 8 is in the use mode or in the locked mode.

The processing unit of the luminaire may be configured to determine the number of objects 12, 13 on the working table 10 by performing an object recognition method on the basis of the received detection results of the one or more sensors 4. In this case, the one or more sensors 4 may comprise or correspond to one or more cameras and/or video cameras that may provide images of the working table 10 in the form of image data and the processing unit of the luminaire 2 may be configured to perform an image processing method for recognizing respectively determining objects present on the working table 10. The one or more sensors 4 may also be implemented by different (more simple) sensors that are configured to detect objects, e.g. radar sensors, infrared sensors etc. On the basis of the determined number of objects 12, 13 on the table, the processing unit may be configured to determine the tidiness level of the working table 10.

In particular, one or more parameters may be defined for evaluating the tidiness level of the working table 8. For example, the total number of objects, in particular movable objects, (such as coffee cup, papers, files, books etc.) present on the working table 8, the density of such objects on the working table, the type of the objects (e.g. unnecessary objects, such as garbage, crumpled paper etc.), the presence of dust and/or dirt etc. may be parameters for evaluating the tidiness level.

In case the processing unit determines that the tidiness level is below a tidiness level threshold (which may be set according to the aforementioned parameters), the processing unit of the luminaire 2 may determine that the working table is untidy and, thus, needs a cleaning and/or tidy up.

In response to having determined the tidiness level of the working table 10, the processing unit of the luminaire 2 is configured to perform an action in dependence on the determined tidiness level of the working table 10. For a detailed description of this, reference is made to the above description of the luminaire according to the first aspect or any of its implementation forms, the system according to the second aspect or any of its implementation forms, the luminaire 2 as well as the system 1 of Figure 1 and the luminaire 2 of Figure 2.

The above description with regard to Figures 1, 2, 3 and 4 is correspondingly valid for describing implementation forms of the system according to the third aspect. In particular, the description of the function and operation of the processing unit of the luminaire of Figures 1, 2, 3 and 4 is correspondingly valid for describing implementation forms of the system according to the third aspect, in particular for describing the function and operation of the optional central control unit and/or optional computer of the system according to the third aspect.

To sum up, the luminaire and the systems presented by the present disclosure allow observing the working environment of a person in order to assist the person and optimize the person's behavior as well as the person's working environment.

## Claims

1. A luminaire (2) for providing lighting to a working environment (3), in particular to a working table (10), of a person (9) and monitoring a condition of the working environment (3) and/or a condition of the person (9), wherein
- the luminaire (2) comprises
- one or more sensors (4) configured to detect the person (9), when the person (9) is present in the working environment (3), and/or the working environment (3), and
- a processing unit (5) configured to monitor the condition of the working environment (3) and/or the condition of the person (9) on the basis of detection results of the one or more sensors (4) by processing the detection results; and
- the processing unit (5) is configured to perform an action in dependence on the condition of the working environment (3) and/or the condition of the person (9).

2. The luminaire (2) according to claim 1, wherein
- the processing unit (5) is configured to
- determine a deviation of the condition of the working environment (3) from a target condition of the working environment (3) and/or a deviation of the condition of the person (9) from a target condition of the person (9); and
- perform the action in case the deviation of the condition of the working environment (3) from the target condition of the working environment (3) and/or the deviation of the condition of the person (9) from the target condition of the person (9) is determined.

3. The luminaire (2) according to claim 1 or 2, wherein the one or more sensors (4) comprise or correspond to one or more of the following sensors:
- one or more presence- and/or movement sensors configured to detect a presence and/or movement of the person (9);
- one or more sensors, in particular radar based sensors, configured to measure a distance to the person (9) and/or an object of the working environment (3), in particular of a working table (10) of the working environment (3);
- one or more sensors configured to measure the temperature of the working environment (3) and/or the temperature of the person (9);
- one or more sensors configured to measure the light in the working environment (3);
- one or more cameras; and
- one or more video cameras.

4. The luminaire (2) according to any one of the previous claims, wherein
- the condition of the working environment (3) comprises or corresponds to one or more of the following conditions:
- a condition of a working table (10) present in the working environment (3), in particular a tidiness level of the working table (10), and
- a condition of a computer (8) present in the working environment (3), in particular on the working table (10), with regard to a use mode or a locked mode; and/or
- the condition of the person (9) comprises or corresponds to one or more of the following conditions:
- a posture of the person (9),
- a facial expression of the person (9),
- a gesture of the person (9),
- a temperature of the person (9),
- a sitting position of the person (9),
- a stress level of the person (9),
- a health level of the person (9), and
- a tiredness level of the person (9).

5. The luminaire (2) according to any one of the previous claims, wherein
- the processing unit (5) is configured to determine the posture, facial expression gesture and/or temperature of the person (9) by processing the detection results of the one or more sensors (4); and
- the processing unit (5) is configured to determine:
- the sitting position of the person (9) based on the posture,
- the stress level of the person (9) based on the posture, facial expression, gesture and/or temperature of the person,
- the health level of the person (9) based on the posture, facial expression, gesture and/or temperature, and/or
- the tiredness level of the person (9) based on the posture, facial expression, gesture and/or temperature of the person.

6. The luminaire (2) according to any one of the previous claims, wherein
- the processing unit (5) is configured to, by processing the detection results of the one or more sensors (4):
- identify the person (9),
- determine whether the person (9) is present or not in the working environment (3),
- determine a tidiness level of the working table (10) present in the working environment (3), and/or
- determine whether the computer (8) present in the working environment (3) is in the use mode or locked mode.

7. The luminaire (2) according to any of the previous claims, wherein the action comprises or corresponds to one or more of the following actions:
- informing at the luminaire (2) about the condition of the working environment (§) and/or the condition of the person (9), in particular by controlling a change of a light emission by the luminaire (2); and
- controlling in dependence on the condition of the working environment (3) and/or the condition of the person (9)
- a light emission by the luminaire (2),
- an operation of one or more building management devices, in particular one or more devices of a heating and/or cooling system, devices of a ventilation system, further lighting devices and/or window blinds, and/or
- an operation of the computer (8) present in the working environment (3).

8. The luminaire (2) according to any of the previous claims, wherein
- the luminaire (2) comprises a communication unit (6) for, preferably wireless, communication; and
- the action comprises or corresponds to communicating, using the communication unit (6), information about the condition of the working environment (3) and/or the condition of the person (9) to
- a central control unit (7),
- the computer (8) present in the working environment (3),
- at least one electronic device of the person (9), in particular a smart phone, a tablet computer, a smart watch and/or a laptop computer, and/or
- a remote person.

9. The luminaire (2) according to any one of the previous claims, wherein
- in case the processing unit (5) determines that the sitting position of the person (9) deviates from a target sitting position, the processing unit (5) is configured to
- inform at the luminaire (2) about the sitting position deviating from the target sitting position, in particular by changing the light emission by the luminaire (2); and/or
- communicate information about the sitting position deviating from the target sitting position to
- the central control unit (7),
- the computer (8) present in the working environment (3),
- the at least one electronic device of the person (9), and/or
- the remote person.

10. The luminaire according to any one of the previous claims, wherein
- in case the processing unit (5) determines the stress level, the tiredness level and/or the health level of the person (3), the processing unit (5) is configured to
- inform at the luminaire (2) about the stress level of the person (9) above a threshold stress level, the tiredness level of the person (9) above a threshold tiredness level and/or the health level of the person (9) below a health level threshold, in particular by changing the light emission by the luminaire (2);
- communicate information about the stress level, the tiredness level and/or the health level of the person (9) to
- the central control unit (7),
- the computer (8) present in the working environment (10),
- the at least one electronic device of the person (9), and/or
- the remote person; and/or
- control in dependence on the stress level, the tiredness level and/or the health level of the person (9)
- the light emission by the luminaire (2),
- the operation of the one or more building management devices, and/or
- the operation of the computer (8) present in the working environment (3).

11. The luminaire (2) according to any one of the previous claims, wherein
- the processing unit (5) is configured to
- determine whether the health level of the person (9) is below a health level threshold, and
- request help, in particular a rescue service, in case the health level of the person (9) is below the health level threshold.

12. The luminaire (2) according to any one of the previous claims, wherein
- in case the processing unit (5) determines the tidiness level of the working table (10), in particular to be below a tidiness level threshold, the processing unit (5) is configured to communicate information about the tidiness level to
- the central control unit (7),
- the computer (6) present in the working environment (3),
- the at least one electronic device of the person (9), and/or
- the remote person.

13. The luminaire (2) according to any one of the previous claims, wherein
- in case the processing unit (5) determines that the person (9) is not present in the working environment (3) and the computer (8) present in the working environment (3) is in the use mode, the processing unit (5) is configured to
- communicate information about the absence of the person (9) and optionally the use mode of the computer (8) to
- the central control unit (7),
- the computer (8) present in the working environment (3),
- the at least one electronic device of the person (9), and/or
- the remote person; and/or
- control the operation of the computer (8) such that the mode of the computer (8) is changed from the use mode to the locked mode.

14. The luminaire (2), according to any one of the previous claims, wherein
- the luminaire (2) is a free standing luminaire configured to be positioned in the working environment (3), in particular at the floor next to the working table (10) or on the working table (10).

15. A system (1) for providing lighting to a working environment (3), in particular to a working table (10), of a person (9) and monitoring a condition of the working environment (3) and/or a condition of the person (9), wherein
- the system (1) comprises one or more luminaires (2) according to any one of the previous claims;
- the system (1) in addition comprises
- a central control unit (7) configured to, preferably wirelessly, receive information about the condition of the working environment (3) and/or the condition of the person (9) from the processing unit (5) of the one or more luminaires (2); and/or
- a computer (8) present in the working environment (3) configured to, preferably wirelessly, receive information about the condition of the working environment (3) and/or the condition of the person (9) from the processing unit (5) of the one or more luminaires (2); and
- the central control unit (7) and/or the computer (8) is configured to perform an action in dependence on the condition of the working environment (3) and/or the condition of the person (9).

16. The system (1) according to claim 15, wherein
- the central control unit (7) and/or the computer (8) is configured to, based on the received information:
- determine a deviation of the condition of the working environment (3) from a target condition of the working environment (3) and/or a deviation of the condition of the person (9) from a target condition of the person (9); and
- perform the action in case the deviation of the condition of the working environment (3) from the target condition of the working environment (3) and/or the deviation of the condition of the person (9) from the target condition of the person (9) is determined.

17. The system (1) according to claim 15 or 16, wherein
- the action performable by the central control unit (7) based on the received information comprises or corresponds to one or more of the following actions:
- informing at the one or more luminaires (2) about the condition of the working environment (3) and/or the condition of the person (9), in particular by controlling a change of the light emission by the one or more luminaires (2);
- communicating, preferably wirelessly, information about the condition of the working environment (3) and/or the condition of the person (9) to
- a computer (8) present in the working environment (3),
- at least one electronic device of the person (9), in particular to a smart phone, a tablet computer, a smart watch and/or a laptop computer, and/or
- a remote person; and/or
- controlling in dependence on the condition of the working environment (3) and/or the condition of the person (9)
- a light emission by the one or more luminaires (2),
- an operation of one or more building management devices, in particular one or more devices of a heating and/or cooling system, devices of a ventilation system, further lighting devices and/or window blinds, and/or
- an operation of the computer (8) present in the working environment (3).

18. The system (1) according to any one of claim 15 to 17, wherein
- the action performable by the computer (8) based on the received information comprises or corresponds to one or more of the following actions:
- informing at the one or more luminaires (2) about the condition of the working environment (3) and/or the condition of the person (9), in particular by controlling a change of the light emission by the one or more luminaires (2);
- communicating, preferably wirelessly, information about the condition of the working environment (3) and/or the condition of the person (9) to
- a central control unit (7),
- at least one electronic device of the person (9), and/or
- a remote person; and/or
- controlling in dependence on the condition of the working environment (3) and/or the condition of the person (9)
- the light emission by the one or more luminaires (2),
- the operation of one or more building management devices, and/or
- its own operation.

19. The system (1) according to any one of claims 15 to 18, wherein
- in case the central control unit (7) and/or the computer (8) receives information about a health level of the person (9) from the one or more luminaires (2), the central control unit (7) and/or the computer (8) is configured to
- determine whether the health level of the person (9) is below a health level threshold, and/or
- request help, in particular a rescue service, in case the health level of the person (9) is below the health level threshold.

20. The system according to any one of claims 15 to 19, wherein
- the computer (8) is configured to display instructions in dependence on the received information; and
- in particular in case the computer (8) receives information about a sitting position of the person (9) deviating from a target sitting position (9), the computer (8) is configured to display instructions instructing the person (9) to adapt its sitting position to the target sitting position, or
- in particular in case the computer (8) determines based on the received information that a sitting position of the person (9) deviates from a target sitting position, the computer (8) is configured to display instructions instructing the person (9) to adapt its sitting position to the target sitting position.

21. A system (1) for providing lighting to a working environment (3), in particular to a working table (10), of a person (9) and monitoring a condition of the working environment (3) and/or a condition of the person (9), wherein
- the system (1) comprises one or more luminaires, wherein each luminaire comprises one or more sensors (4) configured to detect the person (9), when the person (9) is present in the working environment (3), and/or the working environment (3), and a communication unit configured to communicate, in particular wirelessly, detection results of the one or more sensors to the outside of the luminaire; and
- the system (1) in addition comprises
- a central control unit (7) configured to, preferably wirelessly, receive the detection results from the one or more luminaires; and/or
- a computer (8) present in the working environment (3) configured to, preferably wirelessly, receive the detection results from the one or more luminaires;
- the central control unit (7) and/or the computer (8) is configured to monitor the condition of the working environment (3) and/or the condition of the person (9) on the basis of the received detection results by processing the received detection results; and
- the central control unit (7) and/or the computer (8) is configured to perform an action in dependence on the condition of the working environment (3) and/or the condition of the person (9).
